# EUROPEAN PATENT APPLICATION

(11) **EP 3 586 697 A1**
(43) Date of publication of application: **01.01.2020**
(21) Application number: 18179490.0
(22) Date of filing: 25.06.2018
(51) Int. Cl.: A47J 36/20, A47J 43/07, A47J 19/02

(54) **A FOOD PREPARATION APPARATUS**

(71) Applicant: Koninklijke Philips N.V., 5656 AE Eindhoven (NL)
(72) Inventor: OTTI, Thomas, 5656 AE Eindhoven (NL)
(74) Representative: de Haan, Poul Erik

(57) **Abstract**

A food preparation apparatus (2) comprising:
a rotatable implement (30) configured to process a food item introduced into the food preparation apparatus to produce solid food particles and juice;
a drum (20) rotatably mounted on the food preparation apparatus, wherein the drum comprises a radially outer drum wall extending in a circumferential plane and enclosing an interior space (24) of the food preparation apparatus for containing the food item during processing, wherein the food preparation apparatus is configured to rotate the drum about an axis of rotation (X₁) such that the solid food particles and juice are urged radially outwards by virtue of the rotation of the drum; and
a filter element (42) which is rotatable with the drum, the filter element comprising a perforated wall (44), wherein the perforated wall at least partially defines a juice channel for juice to pass out of the drum, the perforated wall being configured to permit the juice from the food item to pass through the perforated wall and restrict the solid food particles from passing through the perforated wall, wherein the perforated wall is displaced from the circumferential plane and extends in a direction having components in a radial direction of the drum, such that juice and solid food particles pass through the perforated wall in a direction with a component in a circumferential direction of the drum.

## Description

### TECHNICAL FIELD OF THE INVENTION

The present disclosure relates to a food preparation apparatus and is particularly, although not exclusively, concerned with a food preparation apparatus configured to improve juice extraction.

### BACKGROUND OF THE INVENTION

Different types of food preparation apparatus are known for extracting juice from food items, such as fruits and vegetables. For example, a centrifugal juicer operates by coarsely shredding the fruit or vegetable within a rotating drum. The resulting shredded food particles, and juice that has been released from the food item, are urged outwards by virtue of the rotation of the drum. An outer wall of the drum is perforated and the juice is permitted to drain through the outer wall of the drum, whilst the shredded food particles are retained within the drum.

In order to release the maximum amount of juice from the food item, it is desirable to shred or chop the food items finely, e.g. in order to break open the cells of the fruit or vegetable. However, when the food item is shredded finely, the perforations in the outer wall of the drum are more likely to become blocked by the shredded food particles, reducing the overall performance of the juicer. Furthermore, finely processed food particles can become lodged in the perforations of the outer wall, making the drum difficult to clean. In a conventional juicer, such as a centrifugal juicer, particles smaller than the size of the perforations can pass through the drum under the action of centrifugal force, so the juice produced is not clear.

Existing juicers are therefore designed to balance juice extraction performance and ease of cleaning the apparatus, with the quantity of juice extracted from the food item.

### SUMMARY OF THE INVENTION

According to an aspect of the present invention, there is provided a food preparation apparatus comprising:
a rotatable implement configured to process a food item introduced into the food preparation apparatus to produce solid food particles and juice;
a drum rotatably mounted on the food preparation apparatus, wherein the drum comprises a radially outer drum wall extending in a circumferential plane and enclosing an interior space of the food preparation apparatus for containing the food item during processing, wherein the food preparation apparatus is configured to rotate the drum about an axis of rotation such that the solid food particles and juice are urged radially outwards by virtue of the rotation of the drum; and
a filter element which is rotatable with the drum, the filter element comprising a perforated wall, wherein the perforated wall at least partially defines a juice channel for juice to pass out of the drum, the perforated wall being configured to permit the juice from the food item to pass through the perforated wall and restrict the solid food particles from passing through the perforated wall, wherein the perforated wall is displaced from the circumferential plane and extends in a direction having components in a radial direction of the drum, such that juice and solid food particles pass through the perforated wall in a direction with a component in a circumferential direction of the drum.

According to another aspect of the present disclosure, there is provided a food preparation apparatus comprising:
a rotatable blade configured to process a food item introduced into the food preparation apparatus to produce solid food particles and juice, e.g. released from the food item;
a drum rotatably mounted on the food preparation apparatus, wherein the drum defines an interior space of the food preparation apparatus for containing the food item during processing, wherein the food preparation apparatus is configured to rotate the drum about an axis of rotation such that the solid food particles and juice are urged radially outwards by virtue of the rotation of the drum, wherein the drum comprises one or more juice passages for juice and solid food particles to leave the drum; and
one or more filters elements arranged within the drum, the filter elements including one or more perforated walls, wherein the perforated walls are arranged between the interior space and the openings of the juice passages, for example, the perforated walls may at least partially surround the openings of the juice passages, and are configured to permit the juice from the food item to pass through the perforated walls towards the openings and restrict the solid food particles from passing through the perforated walls, wherein the perforated walls extend in respective directions having components in a radial direction of the drum, such that juice and solid food particles pass through the perforations in the wall in a direction with a component in a circumferential or tangential direction of the drum.

The food preparation apparatus may further comprise a juice collector arranged to collect the juice and solid food particles leaving the drum, e.g. via the openings. The juice collector may be formed by a housing of the food preparation apparatus.

The food preparation apparatus may further comprise a juice outlet arranged to allow juice and solid food particles that have left the drum to be outlet from the food preparation apparatus.

The filter elements may protrude inwardly from an outer wall of the drum towards the axis of rotation of the drum. The perforated walls may extend inwardly from the outer wall of the drum in directions substantially perpendicular to the surface of the drum, e.g. at the locations from which the perforated walls extend.

The perforated walls may extend inwardly from the outer wall of the drum with a component in a circumferential direction of the drum, such that the filter elements over hang a portion of the outer wall of the drum on one or both of the sides of the filter elements, e.g. in a circumferential direction of the drum.

The filter elements may be wedge shaped. Side walls of the filter elements may be arranged at a non-zero angle relative to one another. For example, the filter elements may have a base at or adjacent to the outer wall of the drum and a tip at a radially inner extent of the filter elements. The tip may be flat, pointed or rounded. The perforated walls may form opposing side walls of the filter elements, e.g. opposing side of the wedge shape.

The filter elements may be configured to direct juice and solid food particles of the food items circulating within the drum towards the rotatable blade, e.g. whilst the food item is being processed by the rotatable blade.

The filter elements may be hollow. The perforated walls form outer surfaces of the filter elements. The filter elements may form a channel for juice and solid food particles to flow through the hollow of the filter elements inside of the perforated walls.

The filter elements may extend in a direction parallel with an axis of rotation of the sieve, e.g. over an axial length of the drum. For example, the filter elements may extend over substantially the complete axial length of the drum.

The food preparation apparatus may further comprises a base plate. The base plate may be arranged at an axial end of the drum. The filter elements may be coupled to the base plate. The base plate may define one or more apertures for juice and solid particles to leave the drum, e.g. via juice passages formed in the drum. The apertures may form the juice passages. Alternatively, the apertures maybe in fluid communication with the juice passages. The perforated walls of the filter elements may at least partially surround respective ones of the apertures. In some arrangements, the filter elements may substantially surround the apertures.

The base plate may be configured to restrict the juice and/or solid food particles from passing out of the drum between the filter elements. The base plate may be configured to form a seal between the outer wall of the drum and the bass plate in order to restrict the juice and/or solid food particles from passing out of the drum between the base plate and the inner wall of the drum.

The filter elements may be interchangeable with further filter elements having walls with perforations of a different size, in order to adjust the proportion of the solid food particles able to pass through the perforated walls.

The rotatable implement may comprise a blade, such as a blender knife. Alternatively, the rotatable implement may comprise a grinding tool, a cutting tool or a shredding plate, e.g. a flat disc shaped tool comprising cutting elements projecting from the surface of the disc.

According to another aspect of the present disclosure, there is provided a food preparation apparatus comprising:
a rotatable blade, configured to process a food item introduced into the food preparation apparatus in order to produce solid food particles and juice released from the food item; and
a sieve arranged about the rotating blade, wherein the food preparation apparatus is configured to rotate the sieve about an axis of rotation such that the solid food particles are urged radially outwards by virtue of the rotation of the sieve, wherein the sieve comprises a filter element including one or more perforated walls, wherein the filter elements are configured to permit the juice from the food item to pass through the perforated wall and restrict the solid food particles from passing through the perforated wall, wherein the perforated wall extends in a direction with a component in a radial direction of the drum, such that juice passes through the perforations in the wall in a direction with a component in a circumferential direction of the sieve.

The food preparation apparatus may further comprise a drum mounted on the food preparation apparatus such that the drum is rotatable about the axis of rotation. The drum may be configured to define an interior space of the food preparation apparatus for containing the food item during chopping. The sieve may be arranged within the drum.

According to another aspect of the present disclosure, there is provided a sieve for a food preparation apparatus, wherein the food preparation apparatus comprises:
a rotatable blade configured to process a food item introduced into the food preparation apparatus to produce solid food particles and juice;
a drum rotatably mounted on the food preparation apparatus, wherein the drum defines an interior space of the food preparation apparatus for containing the food item during processing, wherein the food preparation apparatus is configured to rotate the drum about an axis of rotation such that the solid food particles and juice are urged radially outwards by virtue of the rotation of the drum, wherein the drum comprises one or more openings for juice and solid food particles to leave the drum, wherein the sieve comprises:
   one or more filters elements arrangeable within the drum, the filter elements including one or more perforated walls, wherein, when the filter elements are arranged within the drum, the perforated walls are arranged between the interior space and the openings, and are configured to permit the juice from the food item to pass through the perforated walls towards the openings and restrict the solid food particles from passing through the perforated walls, wherein the perforated walls extend in respective directions having components in a radial direction of the drum, such that juice and solid food particles pass through the perforations in the wall in a direction with a component in a circumferential direction of the drum.

According to another aspect of the present disclosure, there is provided a sieve for a food preparation apparatus, wherein the sieve comprises:
one or more filters elements arrangeable within a drum of the food preparation apparatus, the filter elements including one or more perforated walls, wherein, when the filter elements are arranged within the drum, the perforated walls are arranged between the interior space and the openings, and are configured to permit the juice from the food item to pass through the perforated walls towards the openings and restrict the solid food particles from passing through the perforated walls, wherein the perforated walls extend in respective directions having components in a radial direction of the drum, such that juice and solid food particles pass through the perforations in the wall in a direction with a component in a circumferential direction of the drum.

To avoid unnecessary duplication of effort and repetition of text in the specification, certain features are described in relation to only one or several aspects or embodiments of the invention. However, it is to be understood that, where it is technically possible, features described in relation to any aspect or embodiment of the invention may also be used with any other aspect or embodiment of the invention.

### BRIEF DESCRIPTION OF THE DRAWINGS

For a better understanding of the present disclosure, and to show more clearly how it may be carried into effect, reference will now be made, by way of example, to the accompanying drawings, in which:
Figure 1 is a schematic, part sectional view of a food preparation apparatus;
Figure 2 is a flow chart depicted a method of operating the food preparation apparatus;
Figure 3a is a perspective view of a filter basket for a food preparation apparatus;
Figure 3b is a schematic sectional view of a filter element of the filter basket depicted in Figure 3a, illustrating the directions of movements of solid food particles and juice at the filter element;
Figure 4 is a perspective view of a filter basket with solid food particles collected between filter elements following juice extraction;
Figure 5a is a perspective view of another filter basket for a food preparation apparatus;
Figure 5b is a schematic sectional view of a filter element of the filter basket depicted in Figure 5a, illustrating the directions of movements of solid food particles and juice at the filter element;
Figure 6a is a perspective view of another filter basket for a food preparation apparatus;
Figure 6b is a schematic sectional view of a filter element of the filter basket depicted in Figure 6a, illustrating the directions of movements of solid food particles and juice at the filter element;
Figure 7a is a schematic sectional view of a drum for a food preparation apparatus through a central axis of the drum;
Figure 7b is a schematic top view of the drum depicted in Figure 7a;
Figure 8 is a schematic top view of another drum having integral filter elements; and
Figure 9 is a schematic top view of another drum having integral filter elements.

### DETAILED DESCRIPTION OF EMBODIMENTS

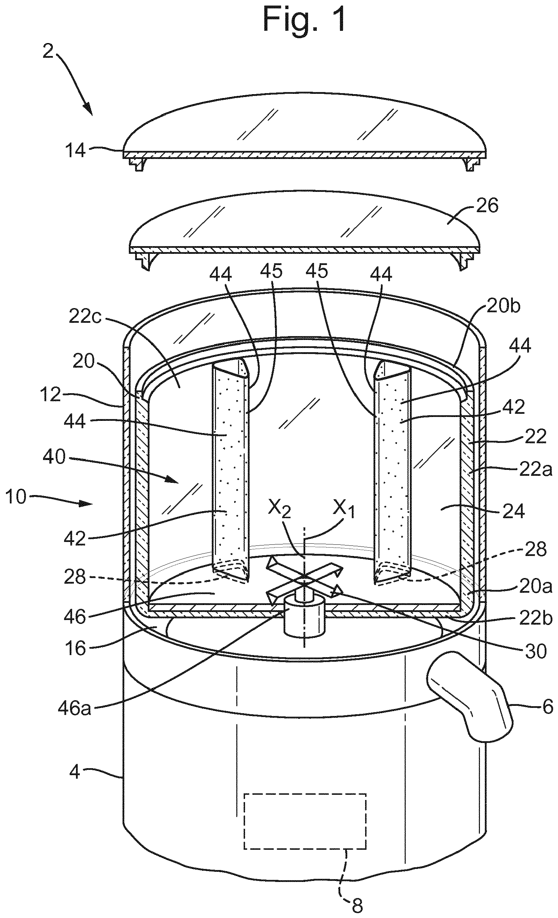

With reference to Figure 1, a food preparation apparatus 2 comprises a base 4 and a housing 10 supported on the base 4. The housing 10 includes a container 12 and a lid 14 for closing an opening of container 12, e.g. such that food items are prevented from leaving the housing 10 during processing, and other objects are prevented from contacting the rotating components of the food preparation apparatus 2.

The container 12 may form a juice collector 16 of the food preparation apparatus 2 for collecting solid food particles and juice that have been produced within the food preparation apparatus 2, as described below, to be included in the food product produced by the food preparation apparatus 2.

The food preparation apparatus 2 may comprise a juice outlet 6, such as a tube or duct, in fluidic communication with the juice collector 16 for juice and solid food particles collected by the juice collector 16 to be outlet from the food preparation apparatus 2. The juice collector 16 may be shaped to direct the collected juice and food particles towards the juice outlet 6. The juice and solid food particles that are outlet from the food preparation apparatus may be collected by the user in a storage container or in a drinking vessel (not shown).

Alternatively, the food preparation apparatus 2 may not comprise a juice outlet 6. Instead, the food product, e.g. mixture of juice and solid food particles, produced by the food preparation apparatus 2 may be collected within the juice collector 16 and may be poured out of the housing container 12, e.g. through the opening of the container, after the food preparation apparatus 2 has finished processing the food items.

The food preparation apparatus 2 comprises a drum 20 rotatably mounted within the housing 10. The food preparation apparatus 2 may be configured to rotate the drum 20 about a first axis of rotation X₁. The food preparation apparatus may comprise a power unit 8, such as an electric motor, provided within the base 4 for driving the rotation of the drum 20. The drum 20 may be selectively couplable to the power unit 8, e.g. via a clutch assembly (not shown), so that the drum 20 can be selectively driven by the power unit 8.

The drum 20 comprises a drum housing 22, which defines an interior space 24 for receiving food items to be processed.

The drum housing 22 may be any desirable shape. To ensure that the drum housing 22 is rotationally balanced it may be rotationally symmetrical. It may, for example, be cylindrical, conical, spherical or polygonal.

As depicted, the drum housing 22 is substantially cylindrical, having an outer wall 22a that defines a substantially constant circular cross-section along its axial length. As mentioned above, in other arrangements, the drum housing 22 may be any other desirable shape. For example, the outer wall 22a may taper or curve inwards towards the axis of rotation X₁ at either or both of the ends, e.g. axial ends, of the drum housing 22. In other words, either or both of the axial ends of the drum housing 22 may be at least partially tapered, rounded or domed.

In one arrangement, the outer wall 22a curves inwardly towards the first axis of rotation X₁ at a lower end 20a of the drum housing 22, in order to encourage processed food items to flow towards the centre of the drum housing 22, e.g. towards the first axis of rotation at the lower end 20a of the drum.

The drum housing 22 may comprise an axial end wall 22b at a lower end 20a of the drum. As depicted, an opening 22c may be formed at the upper end 20b of the drum for receiving food items to be processed.

The drum 20 further comprises a lid 26 for closing the opening 22c of the drum housing 22 at the upper end 20b, e.g. to prevent food items from leaving the interior space through the opening 22c during use of the food preparation apparatus 2.

The drum 20 further comprises one or more juice passages 28 formed in the drum housing 22 or the lid 26. The juice passage 28 are in fluidic communication with the interior space 24 of the drum housing 22 and the juice collector 16, and are configured to provide passages for juice and solid food particles to pass from the interior space 24 to the juice collector 16. In the arrangement shown, the juice passages 28 are formed in the axial end wall 22b at the lower end 20a of the drum. However, in other arrangements, the juice passages 28 may be formed in the outer wall 22a and may be formed at or towards, e.g. closer to, the upper end 20b of the drum. In some arrangements, the juice passages 28 may, additionally or alternatively, be formed in the lid 26.

The food preparation apparatus 2 comprises a blade 30 rotatably mounted within the interior space 24. As depicted, the blade 30 may be mounted at or towards the lower end 20a of the drum 20. The food preparation apparatus 2 is configured to rotate the blade 30 within the interior space 24 in order to process, e.g. chop or shred, food items, such as pieces of fruit or vegetables, that have be placed into the interior space 24, to produce solid food particles, e.g. fruit and/or vegetable fibres or pulp, and juice that is released from the food item, e.g. during processing of the food item.

In the arrangement shown in Figure 1, the blade 30 comprises a blending knife configured to finely chop the food items. However, in other arrangements, the blade 30 may comprise a shredding plate, e.g. a flat disc shaped blade comprising cutting elements projecting from the surface of the disc, for finely shredding the food items.

The blade 30 may be rotatably driven by the power unit 8. In other words, the power unit 8 may be a common power unit for the drum 20 and blade 30. Alternatively, the food preparation apparatus 2 may comprise a further power unit (not shown) for driving the rotation of the blade 30.

The blade 30 may be coupled to the power unit separately from the drum 20, so that the blade 30 can be rotated by the power unit independently of the drum 20. For example, the blade 30 may be permanently coupled to the power unit (when the food preparation apparatus is assembled) and the drum 20 may be selectively couplable to the power unit 8. Alternatively, the blade 30 and the drum 20 may both be independently selectively couplable to the power unit 8 during use of the food preparation apparatus 2.

The blade 30 is rotated by the food preparation apparatus 2 about a second axis of rotation X₂. In the arrangement shown in Figure 1, the first and second axes of rotation X₁, X₂ are aligned, e.g. coaxially. However, in other arrangements, the first and second axes of rotation may be spaced apart from one another and/or arranged at an angle, e.g. a non-zero angle, relative to one another.

The food preparation apparatus 2 further comprises a sieve 40. The sieve 40 is arranged within the drum 20, e.g. within the interior space 24, and is configured to restrict the passage of solid food particles from the interior space 24 to the juice passages 28, whilst permitting juice to pass from the interior space 24 towards the juice passages 28. The sieve 40 may be couplable to the drum 20, such that the sieve 40 rotates together with the drum 20.

The sieve 40 comprises one or more filter elements 42 having perforated walls 44. The perforations in the perforated walls 44 may be sized in order to prevent substantially all of the solid food particles from passing through the perforated walls 44. For example, the perforations may be between approximately 0.1mm and 0.8mm in diameter. However, it will be appreciated that some of solid food particles may pass through the perforated wall 44 together with the juice.

As depicted in Figure 1, the filter elements 42 project inwardly from the outer wall 22a of the drum housing 22 into the interior space 24. In other words, the perforated walls 44 extend in respective directions having components in a radial direction of the drum 20, e.g. with respect to the first axis of rotation X₁. The perforated walls 44 are thereby arranged such that juice and solid food particles that pass through the perforations in the walls travel in a direction with a component in a circumferential direction of the drum, e.g. a direction perpendicular to the radial direction of the drum 20 with respect to the axis of rotation X₁.

The filter elements 42 may be wedge shaped, having wider bases at the outer wall 22a and narrowing to flat, rounded or pointed ends as they extend radially inward into the interior space 24. The perforated walls 44 may form opposing side walls of the filter elements 42.

The filter elements 42 may comprise end walls 45 extending between the perforated walls 44 of the filter element 42 at the radially inner extent of the filter element. The end walls 45 may comprise perforations that are similar to the perforations in the perforated walls 44. Alternatively, the end wall 45 may not be perforated. In other arrangements, the perforated walls 44 may meet at the radially inner extent of the filter element 42. In other words, the filter element 42 may not comprise a separate end wall.

The filter elements 42 may be hollow, or otherwise define a juice channel formed within them, in order to allow juice that has passed through the perforated walls 44 to flow through the filter elements 42 towards to juice passages 28. As depicted in Figure 1, the perforated walls 44, may extend at least partially around the perimeters of openings of the juice passages 28.

The filter elements 42 may extend in a direction parallel to the first axis of rotation X₁ over an axial length of the drum 20. In some arrangements, the filter elements 42 may extend over substantially the complete axial length of the drum 20.

The filter elements 42 are circumferentially spaced around the drum 20, e.g. when the food preparation apparatus 2 is assembled. In the arrangements shown in Figure 1, two filter elements 42 are shown. However, in other arrangements, one filter element 42 or more than two filter elements may be provided. For example, the sieve may comprise four, five, six or any other desirable number of filter elements 42. The filter elements 42 may be evenly spaced around the circumference of the drum 20. Alternatively, two, more than two or each of the filter elements 42 may be circumferentially spaced around the drum by different spacings, e.g. different angular spacings, compared to the other filter elements 42. It is important to ensure that the arrangement remains rotationally balanced, when determining the number of filter elements and their location.

In the arrangement illustrated in Figure 1, the sieve 40 further comprises a base plate 46 formed between the filter elements 42, e.g. radially inside of the filter elements 42 relative to the axis of rotation X₁. Each of the filter elements 42 may be coupled to the base plate 46. The base plate 46 may be configured to maintain the relative positions of the filter elements 42 within the drum 20. Additionally, the base plate 46 is arranged to restrict solid food particles from passing between the filter elements 42 towards the juice passages 28. As depicted, the base plate 46 may be substantially planar. The shape of the base plate 46 may substantially correspond to the cross-sectional shape of the drum 20 at the position that the base plate 46 is located in the drum during use of the food preparation apparatus 2.

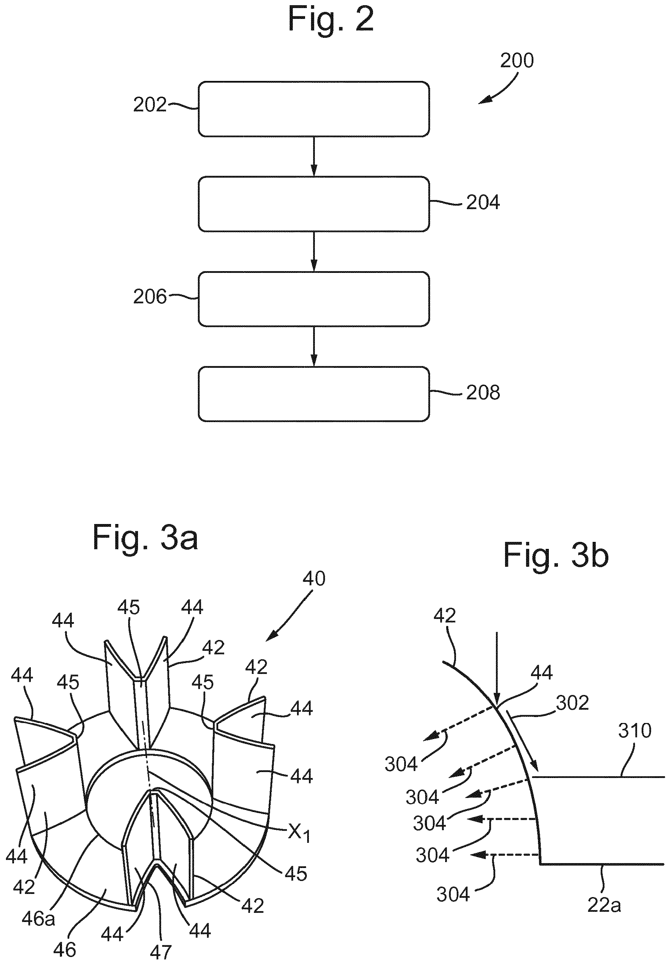

The base plate 46 may not extend over or under the parts of the sieve aligned with the juice passages 28, e.g. so as to avoid blocking the juice passages 28. For example, the base plate 46 may be formed outside of the perforated walls of the juice elements. In other words, the base plate 46 may not extend inside the perforated wall 44 of the filter elements 42, so that the base plate 46 does no block the juice passage 28. In other arrangements, e.g. as depicted in Figure 3a, the base plate 46 may extend inside the perforated walls 44 and apertures 47 may be formed in the base plate 46 in order to permit juice and solid food particles to flow through the base plate 46 to the juice passages 28. In this case, the base plate may extend over substantially the full cross-sectional area of the drum when assembled into the drum.

The base plate 46 may comprise an opening 46a through which a shaft configured to drive the rotation of the blade 30, or a shaft boss, extends. The base plate 46 may be configured to create a seal around the shaft or shaft boss to restrict juice and/r solid food particles from passing between the base plate and the shaft or shaft boss.

The base plate 46 may be configured to support the solid food particles collected by the sieve 40 when the sieve is removed from the drum, so that they can be removed from the drum 20 more easily during cleaning of the food preparation apparatus 2, as described below.

In the arrangement shown in Figure 1, the base plate 46 is arranged at the lower end 20a of the drum. However, in other arrangements, the base plate 46 may be arranged at the upper end 20b of the drum 20. In some arrangements, the base plate 46 may form the lid 26 of the drum housing 22, or may be omitted altogether. For example, the filter elements may be connected to one another in order to maintain their relative positions within the drum 20 and/or they may be coupled to the drum 20.

With reference to Figure 2, the food preparation apparatus 2 may be operated according to a method 200, in order to produce a food product, such as a clear juice or fibre juice. The method 200 comprises a first step 202 in which one or more food items, such as pieces of fruit and/or vegetables are placed into the interior space 24 of the drum 20. The lid 26 of the drum and the lid 14 of the container 12, may then be positioned to close the drum housing 22 and the container 12 respectively.

In a second step 204, the blade 30 is rotatably driven within the interior space 24 in order to process, e.g. chop or shred, the food items to produce solid food particles and juice.

During the second step 204, as the mixture of juice and solid food particles is being circulated within the interior space 24 of the drum 20 under the action of the rotating blade 30, the wedge shaped filter elements 42 may act as flow breakers that channel the mixture of the solid food particles, which is circulating near the outer wall 22a of the drum housing 22, inwards towards the blade 30. The filter elements 42 thereby act to promote homogenous processing of the food items during the second step 204.

In a third step 206, the drum 20 is rotatably driven. Rotating the drum causes the juice and solid food particles within the drum to be urged in a radially outward direction, e.g. relative to the first axis of rotation X₁, by virtue of the rotation of the drum 20. During the third step 206, the solid food particles are pressed against the outer wall 22a of the drum housing 22, which encourages the juice to be released from the solid food particles. The released juice is able to pass through the perforated walls 44 of the filter elements 42, whilst the solid particles are restricted from passing through the perforated walls 44, e.g. due to the sizes of the perforations. An additional effect supporting separation of the juice and the solid particles are high viscosity and friction of the solid particles, e.g. food fibres or pulp versus low viscosity of the juice. Additionally, the solid particles, e.g. the food fibres, could create an additional filter cake which acts to separate the juice from the solid particles. The juice and solid particles that pass through the perforated walls may drain through the juice passages 28 into the juice collector 16.

The third step 206 may be performed after the second step 204 has been completed, e.g. once the food items have been processed to a desired consistency. In some arrangements, the second and third steps 204, 206 may be performed at least partly simultaneously. As described above, in some arrangements, the blade 30 may be permanently coupled to the power unit when the food preparation apparatus 2 is assembly, and hence, the blade 30 may continue being rotated during the third step 206. Alternatively, the blade 30 may be decoupled from the power unit 8 during the third step 206.

The method 200 may comprise a fourth step 208, in which the juice and solid food particles that have reached the juice collector 16 leave the food preparation apparatus 2, e.g. via the juice outlet 6.

As described above, the proportion of the juice that the food preparation apparatus 2 is able to extract from the food items can depend on the size of the particles that the blade 30 produces. More particularly, the smaller the size of the food particles the more juice may be released from the food particles, until the size of the food particles is less than the size of a single fruit or vegetable cell containing the juice. However, for conventional juicers, when the size of the food particles is small it becomes likely that a sieve of the conventional juicer will become blocked, reducing the performance of the juicer and the overall amount of juice that leaves the juicer.

When the particle size becomes smaller than the size of the perforations of a conventional centrifugal juicer, particles can pass through the perforations of the filter and the quality and the clarity of the juice goes down. By contrast, in a juicer according to the present invention, the particle size can be smaller than the size of the perforations without affecting the clarity of the juice. In this case, the rotation of the drum causes the solid particles to be pushed against the imperforate drum wall 22a and not through the perforations of the filter elements 42.

As shown in Figures 3a and 3b, the perforated walls 44 of the filter elements 42 extend in directions with components in the radial direction of the drum 20. Hence, the solid food particles that are urged radially outward by the rotating drum are driven over the surface of perforated walls, e.g. in a direction 302 parallel with the surface of the perforated walls 44.

In contrast, the juice may pass through the perforations in the perforated walls 44. The perforations in the perforated walls 44 extend in direction perpendicular to the surface of the perforated wall at the location of the perforation. The juice therefore passes through the perforations in respective directions having components in a circumferential or tangential direction of the drum 20. In other words, the juice may pass through the perforations in a direction with a component perpendicular to the direction in which the solid food particles move over the surface of the perforated wall 44.

Due to the rotation of the drum 20, the solid food particles collect at the outer wall 22a of the drum housing 22 between the filter elements 42. The solid particles may be compressed between the filter elements 42, e.g. due to the rotation of the drum 20 and the centripetal force exerted on the solid particles by the outer wall 22a of the drum 20. Compressing the solid particles may release additional juice from the solid particles and may form the solid particles into compressed particle blocks 310. The juice released from the compressed particle blocks 310 may travel circumferentially around the drum 20 and pass through the perforations in the perforated walls 44 of the adjacent filter elements 42.

Because the solid particles are driven in the direction parallel to the surface of the perforated walls 44 and collect between the filter elements 42, the perforations do not become blocked by the solid particles, even when the size of the food particles is small.

Furthermore, because the solid particles collect between the filter elements 42, rather than against the perforated walls 44, as in the drum of a conventional juicer, the solid particles are easier to remove from the drum 20 during cleaning of the food preparation apparatus 2.

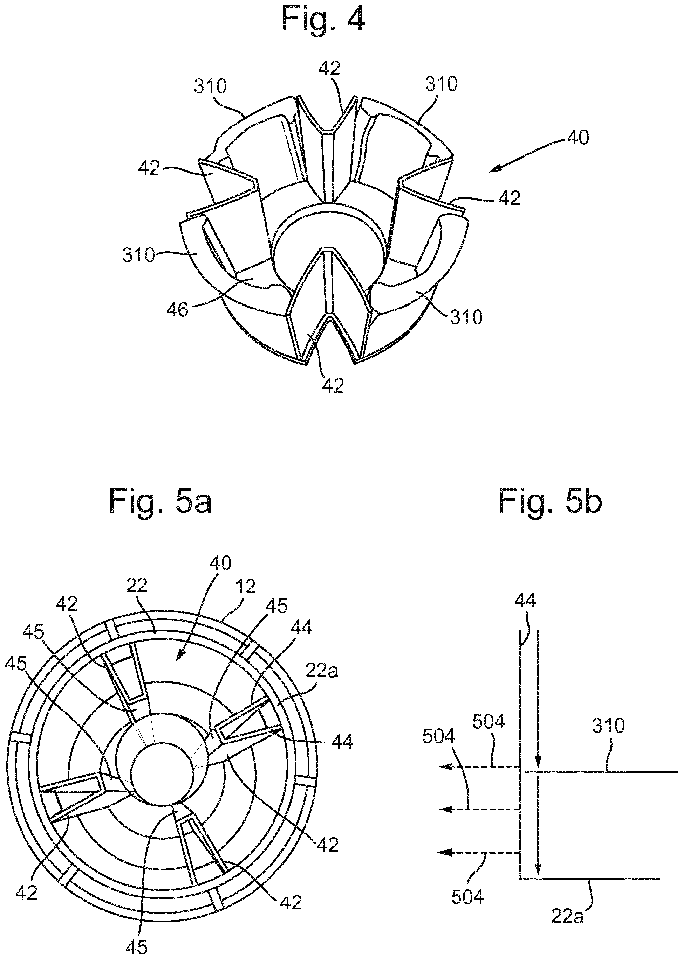

As depicted in Figure 4, when the sieve 40 is removed from the drum 20, after operating the food preparation apparatus 2, the compressed particle blocks 310 may be supported by the base plate 46 of the sieve 40 and may leave the drum together with the sieve 40. Once the sieve 40 has been removed from the drum 20, the compressed particles blocks 310 may be removed from the sieve 40 in a radially outward direction.

With reference to Figure 5a and 5b, the perforated walls 44 of the filter elements 42 may extend from the outer wall 22a of the drum in a direction substantially perpendicular to the inner surface of the drum 20, e.g. in a substantially radial direction. As shown in Figure 5b, in this arrangement the juice may pass through the perforated wall in a direction 504 substantially perpendicular to the radial direction of the drum 20.

In other arrangements, the perforated walls 44 may extend from the outer wall 22a in a direction with a component in a circumferential or tangential direction of the drum, e.g. with respect to the position on the outer wall 22a from which the perforated wall extends. The perforated walls 44 of a particular filter element 42 may extend in respective directions having component in tangential directions of the drum that are towards one another.

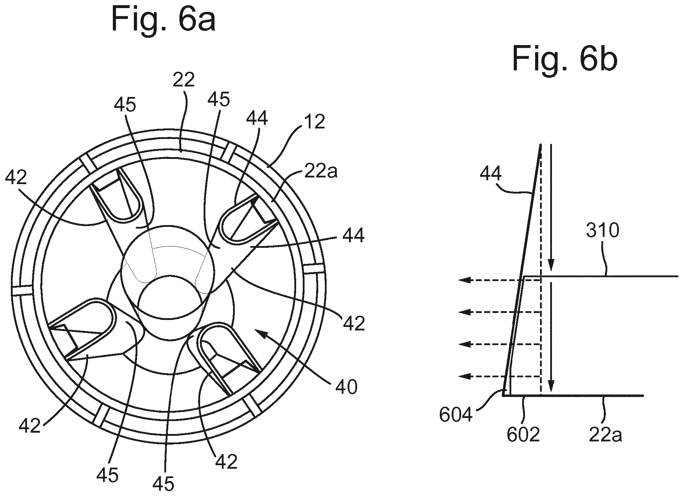

Alternatively, with reference to Figure 6a and 6b, the perforated walls 44 of a particular filter element 42 may extend in respective directions having components in tangential directions of the drum that are away from one another. As shown in Figure 6b, arranging the perforated walls in this way causes the perforated walls to overhang, e.g. radially overhang, an area 602 of the outer wall 22a of the drum on one or both sides of the filter element 42, e.g. in the circumferential direction of the drum 20. Configuring the filter element in this way may lead to a gap 604 being created between the compressed particle blocks 310 and perforated wall 44. The presence of the gap 604 may act to prevent blocking of the perforations close to the outer wall 22a of the drum, which may improve the flow of juice through the perforated wall at or close to the outer wall 22a.

As shown in Figures 5a to 6b, the perforated walls 44 may be substantially straight and flat. Alternatively, as shown in Figures 3a and 3b, the perforated walls 44 may be curved. As shown in Figure 3b, the perforated walls 44 may curve such that the perforated walls extend in a direction with a greater component in the circumferential direction of the drum as the perforated walls 44 extend radially inward.

Curving the perforated walls 44 in this way, may increase the area of the perforated walls. Furthermore, in such arrangements, juice may pass through the portion of the perforated wall that is close to the inner radial extent of the perforated walls in a direction with a greater component in the radial direction of the drum, which may improve the flow of juice through the perforated wall 44.

As shown in Figure 3a, 3b, 5a and 5b, the end walls 45 of the filter elements 42 may be substantially straight and flat. Alternatively, as depicted in Figure 6a, the end wall 45 may be curved, forming a rounded, e.g. convex, inner, e.g. radially inner, end of the filter element 42. In other arrangements, the end wall 45 may form a pointed tip, e.g. a straight sides pointed tip, of the filter element 42.

In some arrangements, the filter elements 42 may be interchangeable. For example, any of the sieves 40 depicted in Figure 3a, 5a, or 6a, or any other sieves, may be positioned within the drum 20, e.g. depending on the type of fruit and/or vegetables being processed.

Different filter elements 42, e.g. provided as part of different sieves 40, may comprise perforated walls 44 having perforations of different sizes, which allow different amounts of the solid food particles to pass through the perforated walls 44 and pass towards the juice passages 28. The filter elements 42 may therefore be interchangeable, e.g. by changing the sieve provided within the drum 20 or the filter elements provided as part of the sieve 40, in order to select the consistency of the food product being produced.

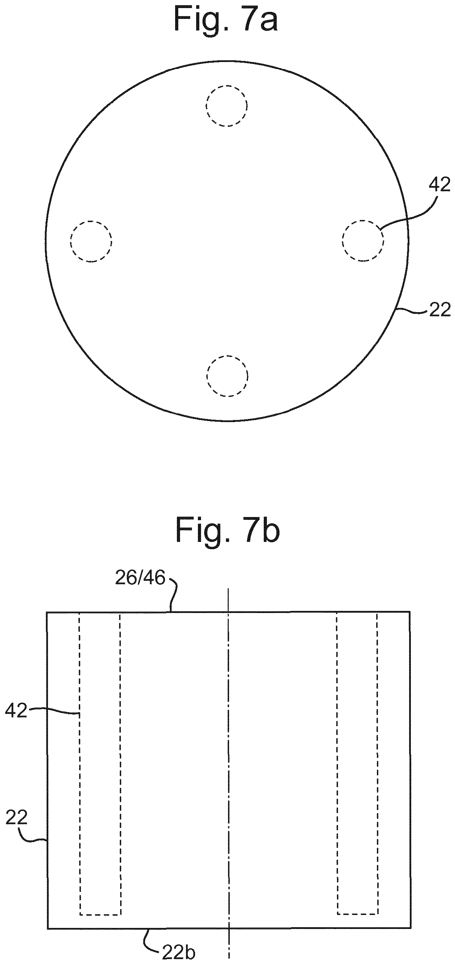

In the arrangements described above, the filter elements 42, e.g. the perforated walls 44 of the filter elements 42, abut the outer wall 22a of the drum 20, e.g. in order to prevent juice from passing between the wall 22a and the perforated wall 44 adjacent to the wall 22a to reach the juice channel defined by the filter element. However, in other arrangements, e.g. as depicted in Figures 7a and 7b, the filter elements 42 may be arranged within the interior of the drum 20 spaced apart from, e.g. not contacting or abutting, the outer wall 22a of the drum.

In such arrangements, the juice channels formed by the filter elements 42 may be surrounded, e.g. circumferentially, by the perforated walls 44 of the filter element. Alternatively, at least a portion of the wall of the filter element sounding the juice channel may not comprise perforations.

As depicted in Figure 7b, the filter elements may be substantially cylindrical. However in other arrangements, the filter elements may be any other desirable shape. In some arrangements, the cross sectional shape of the filter elements, e.g. in a plane perpendicular to an axial direction of the filter elements, may vary over a length, e.g. an axial length, of the filter elements.

Furthermore, although in the arrangements described above, the filter elements 42 are provided as part of the sieve 40 which is removably received within the drum 20, in other arrangements, the filter elements 42 may be couplable, e.g. directly couplable, to the drum 20, or may be integrally formed with the drum 20.

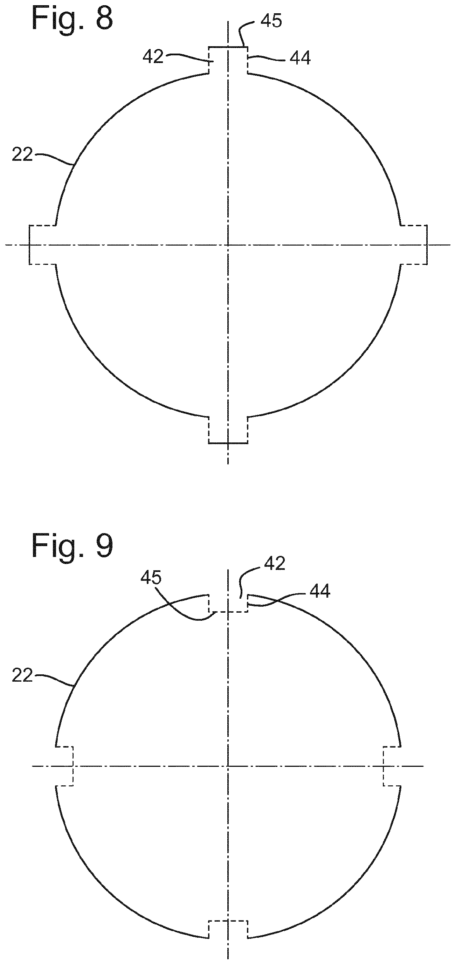

For example, as depicted in Figure 8, the filter elements 42 may be formed by portions of the outer wall 22a of the drum 20 that are displaced radially outward from adjacent portions of the outer wall 22a. Alternatively, as depicted in Figure 9, the filter elements 42 may be formed by portions of the outer wall 22a of the drum 20 that are displaced radially inward from adjacent portions of the outer wall 22a.

As depicted in Figures 8 and 9, perforated walls 44 of the filter element 42 may extend in directions having components in a radial direction of the drum 20. The filter elements may further comprise end walls 45 provided at the radially outer or radially inner extent of the filter elements. The end walls 45 may extend circumferentially, or in a direction with a circumferential component, between the perforated walls 44 of the filter elements. The end walls 45 may be imperforate.

In the arrangements shown in Figures 8 and 9, the filter elements 42 are integrally formed with the drum 20, e.g. with the outer wall 22a. However in other arrangements, the filter elements 42 may be detachably couplable to the drum 20.

It will be appreciated by those skilled in the art that although the invention has been described by way of example, with reference to one or more exemplary examples, it is not limited to the disclosed examples and that alternative examples could be constructed without departing from the scope of the invention as defined by the appended claims.

## Claims

1. A food preparation apparatus (2) comprising:
a rotatable implement (30) configured to process a food item introduced into the food preparation apparatus to produce solid food particles and juice;
a drum (20) rotatably mounted on the food preparation apparatus, wherein the drum comprises a radially outer drum wall extending in a circumferential plane and enclosing an interior space (24) of the food preparation apparatus for containing the food item during processing, wherein the food preparation apparatus is configured to rotate the drum about an axis of rotation (X₁) such that the solid food particles and juice are urged radially outwards by virtue of the rotation of the drum; and
a filter element (42) which is rotatable with the drum, the filter element comprising a perforated wall (44), wherein the perforated wall at least partially defines a juice channel for juice to pass out of the drum, the perforated wall being configured to permit the juice from the food item to pass through the perforated wall and restrict the solid food particles from passing through the perforated wall, wherein the perforated wall is displaced from the circumferential plane and extends in a direction having components in a radial direction of the drum, such that juice and solid food particles pass through the perforated wall in a direction with a component in a circumferential direction of the drum.

2. The food preparation apparatus (2) of claim 1, wherein the food preparation apparatus further comprises a juice collector (16) arranged to collect the juice and solid food particles leaving the drum (20).

3. The food preparation apparatus (2) of claim 1 or 2, wherein the food preparation apparatus further comprises a juice outlet (6) arranged to allow juice and solid food particles that have left the drum (20) to be outlet from the food preparation apparatus.

4. The food preparation apparatus (2) of any of the preceding claims, wherein the filter element (42) protrudes inwardly from an outer wall (22a) of the drum (20) towards the axis of rotation (X₁) of the drum.

5. The food preparation apparatus (2) of claim 4, wherein the perforated wall (44) extends inwardly from the outer wall (22a) of the drum (20) in a direction substantially perpendicular to the surface of the outer wall.

6. The food preparation apparatus (2) of claim 4, wherein the perforated wall (44) extends inwardly from the outer wall (22a) of the drum (20) in a direction with a component in a circumferential direction of the drum, such that the filter element (42) over hangs a portion of the outer wall of the drum on one or both of the sides of the filter element.

7. The food preparation apparatus (2) of any of claims 4 to 6, wherein the filter element (42) is wedge shaped having a base at or adjacent to the outer wall (22a) of the drum (20) and a tip at a radially inner extent of the filter element.

8. The food preparation apparatus (2) of any of the preceding claims, wherein the filter element (42) is configured to direct juice and solid food particles of the food items circulating within the drum towards the rotatable implement (30).

9. The food preparation apparatus (2) of any of the preceding claims, wherein the filter elements (42) are hollow and the perforated wall (44) forms at least part of an outer surface of the filter element.

10. The food preparation apparatus (2) of any of the preceding claims, wherein the filter element (42) extends in a direction parallel with an axis of rotation (X₁) of the drum (20).

11. The food preparation apparatus (2) of any of the preceding claims, wherein the food preparation apparatus further comprises a base plate (46) arranged at an axial end (20a, 20b) of the drum (20), wherein the base plate defines an aperture (47, 28) for juice and solid particles to leave the drum, wherein the perforated wall (44) of the filter element (42) substantially surrounds the aperture.

12. The food preparation apparatus (2) of any of the preceding claims, wherein the filter element (42) is interchangeable with a further filter element having a perforated wall (44) with perforations of a different size, in order to adjust the proportion of the solid food particles able to pass through the perforated wall.

13. The food preparation apparatus (2) of any of the preceding claims, wherein the rotating implement (30) comprises a blender knife.

14. The food preparation apparatus of any of the preceding claims, comprising a plurality of filter elements rotatable with the drum.

15. The food preparation apparatus of claim 14, wherein the filter elements are spaced equidistantly around the drum.
